# EUROPEAN PATENT APPLICATION

(11) **EP 1 186 940 A2**
(43) Date of publication of application: **13.03.2002**
(21) Application number: 01121604.1
(22) Date of filing: 11.09.2001
(51) Int. Cl.: G02F 1/1337

(54) **Light controlling device using liquid crystal and method of producing the same**

(30) Priority: 11.09.2000 JP 2000274344
(71) Applicant: Stanley Electric Co., Ltd., Meguro-ku Tokyo 153-8636 (JP)
(72) Inventor: Toko, Yasuo, Aoba-ku, Yokohama-shi, Kanagawa (JP); Takahashi, Taiju, Aoba-ku, Yokohama-shi, Kanagawa (JP)
(74) Representative: Wagner, Karl H., Dipl.-Ing.

(57) **Abstract**

A photo mask (6) including a slit-shaped light transmission section (5) and a light source are arranged on an outside of a non-treated aligment film (2) of which surface properties change by light radiated thereonto. With a relative positional relationship between the photo mask and the light source kept fixed, the optical alignment-treatment is conducted for the non-treated alignment film by rotating the slit relative to the alignment film to obtain a treated alignment film to be used in a light controlling device employing a layer of liquid crystal molecules with radial alignment. It is thereby possible to obtain a light controlling device of which the apparent refractive index of the liquid crystal layer is not easily influenced by a direction of incidence of light used in liquid crystal lenses or shutters.

## Description

This application is based on Japanese Patent Application 2000-274344 filed on September 11, 2000, the entire contents of which are incorporated herein by reference.

### BACKGROUND OF THE INVENTION

### a) Field of the Invention

The present invention relates to a light controlling device using liquid crystal and a method of producing the same and an optical alignment-treatment for an alignment film.

A light controlling device using liquid crystal is referred to simply as "light controlling device" in this specification.

### b) Description of the Related Art

Research and development have been in process for light controlling devices which controls light by using an optical anisotropy of liquid crystal or reversible changes in electro-optical characteristics of liquid crystal according to re-orientation of molecules thereof. As such devices, there have been known a liquid-crystal lens, a liquid-crystal prism, a liquid-crystal optical shutter, a liquid-crystal rotary wave plate, and the like.

Each of the light controlling device includes a cell container and liquid crystal filled in the cell container.

The cell container includes two transparent substrates arranged opposing each other with a gap therebetween. Disposed on one surface of each transparent substrate are a transparent electrode pattern and an alignment film.

For uniaxially aligning molecules of the liquid crystal, a rubbing process is beforehand conducted in general for the alignment film. In some cases, for multi-domanially aligning molecules of the liquid crystal, a multi-domain treatment is conducted for the alignment film. In the multi-domain treatment, the alignment film is subdivided into small partitions classified into groups and alignment treatments are conducted for the respective groups such that each group has different alignment direction to each other.

In the multi-domain treatment, a mask of a predetermined shape is in general formed by photolithography to cover the partitions of particular groups. A rubbing process or an optical alignment-treatment for aligning the molecules along a predetermined direction is conducted for the remaining partitions of groups not covered with the mask. To treat the partitions of other groups, a mask of another predetermined shape is formed by photolithography.

The refractive index of liquid crystal changes between a direction parallel to and a direction vertical to a longitudinal direction of molecule of the liquid crystal. Therefore, the refractive index of liquid crystal layer is influenced by the direction of light incident thereto.

In this specification, "the apparent refractive index of liquid crystal layer" means an effective (actual) refractive index of liquid crystal layer and is influenced by the direction of the incident light.

The alignment-treatment by rubbing process produces an alignment film which aligns molecules of the liquid crystal in uniaxial direction. Therefore, in a light controlling device including an alignment film treated with the rubbing process, the apparent refractive index of liquid crystal layer is easily influenced by the direction of light incident thereto.

In a light controlling device including an alignment film treated with multi-domain treatment, the apparent refractive index of liquid crystal layer is less influenced by the direction of light incident thereto. However, this light controlling device has non-negligible discontinuity in the alignment direction of molecules of the liquid crystal at boundary between one partition and another partition in the alignment film.

For example, when a liquid-crystal lens has remarkable discontinuity in an alignment direction of molecules of the liquid crystal, distortion in an image can be produced by the liquid-crystal lens. Also in other light controlling devices, when the alignment direction of molecules of the liquid crystal has discontinuity not negligible, there occurs in many cases a disadvantage, for example, that light cannot be desirably controlled at the discontinuity.

### SUMMARY OF THE INVENTION

It is therefore an object of the present invention to provide a light controlling device capable of easily conducting a desired light controlling operation.

Another object of the present invention is to provide a method of producing a light controlling device capable of easily conducting a desired light controlling operation.

Still another object of the present invention is to provide a method of optical alignment-treatment for facilitating to obtain an alignment film which can uniformly align molecules of liquid crystal in any azimuth direction in a plane.

According to one aspect of the present invention, there is provided a light controlling device, comprising (i) a cell container, comprising a first transparent substrate and a second transparent substrate, said first and second transparent substrates opposing each other with a gap therebetween; a transparent electrode pattern and an alignment film formed on an inside surface of each said substrate, at least one of said alignment films being a treated alignment film; and (ii) liquid crystal filled in said cell container, said liquid crystal including liquid-crystal molecules uniformly aligned, when voltages are not applied to said transparent electrode patterns respectively formed on said first and second transparent substrates, in any direction of azimuth in a plane at the surface of said alignment film on said first transparent substrate and in a plane at the surface of said alignment film on said second transparent substrate.

According to another aspect of the present invention, there is provided a method of producing a light controlling device, comprising the steps of: preparing a transparent substrate having one surface on which a transparent electrode pattern and a non-treated alignment film of which surface properties change by light radiated thereonto are formed; arranging a photo mask including a slit-shaped light transmission section and a light source on an outside of said non-treated alignment film; radiating light, with a relative positional relationship between said photo mask and said light source kept fixed, via said light transmission section onto said non-treated alignment film with a constant oblique angle of incidence of light while rotating said non-treated alignment film relative to said photo mask, conducting thereby an optical alignment-treatment for said non-treated alignment film, and resultantly obtaining a treated alignment film thus processed; assembling a cell container using said transparent substrate having said treated alignment film; and filling said cell container with liquid crystal.

According to another aspect of the present invention, there is provided a method of optical alignment-treatment, comprising the steps of: arranging a photo mask including a slit-shaped light transmission section and a light source on an outside of a non-treated alignment film of which surface properties change by light radiated thereonto; and radiating light, with a relative positional relationship between said photo mask and said light source kept fixed, via said light transmission section onto said non-treated alignment film with a constant oblique angle of incidence of light while rotating said non-treated alignment film relative to said photo mask and conducting thereby an optical alignment-treatment for said non-treated alignment film.

By uniformly aligning molecules of the liquid crystal in any azimuth direction in a plane at the surface of the alignment film on the first transparent substrate and in a plane at the surface of the alignment film on the second transparent substrate, the apparent refractive index of the liquid crystal layer can be kept substantially fixed regardless of an incidence angle of light incident thereto.

In a mode of the liquid crystal of which molecules are uniformly aligned in any azimuth direction in a plane at the surface of the alignment film, molecules of the liquid crystal are aligned, for example, radially or concentrically in the plane.

By the above-described optical alignment-treatment, it is possible to produce an alignment film which radially or concentrically aligns the liquid-crystal molecules in a plane at the surface.

In a light controlling device including two alignment films each of which uniformly aligns the liquid-crystal molecules in any azimuth direction in a plane at the surface, the apparent refractive index of liquid crystal layer is less influenced by the direction of light incident thereto. This leads to a light controlling device to easily control light in a desired way.

Also in a case in which a cell container of a light controlling device includes a first alignment film for which the optical alignment-treatment is conducted and a second alignment film for which any alignment-treatment is not conducted and the cell container is filled with liquid crystal to which a chiral agent is added, there can be produced a light controlling device in which molecules of the liquid crystal are aligned in any azimuth direction in a plane at the surface of the first alignment film and in a plane at the surface of the second alignment film.

In this specification, a film made of an alignment material for which an alignment-treatment has been conducted is called "a treated alignment film" and a film made of an alignment material for which any alignment treatment is not conducted is called "a non-treated alignment film".

In this specification, "a slit-shaped light transmission section" is as follows. When a light shielding film having a slit is formed on a transparent base material, a region of the transparent base material exposed in the slit forms the slit-shaped light transmission section. Moreover, a light transmission section implemented by a slit formed in a predetermined location of the light shielding material also forms the slit-shaped light transmission section.

### BRIEF DESCRIPTION OF THE DRAWINGS

The objects and features of the present invention will become more apparent from the consideration of the following detailed description taken in conjunction with the accompanying drawings in which:
Fig. 1 is a side view schematically showing a transparent substrate prepared in a method of producing a light controlling device according to an embodiment;
Fig. 2A is a front view schematically showing a positional relationship between a non-treated alignment film and a photo mask for an optical alignment treatment in a method of producing a light controlling device according to the embodiment;
Fig. 2B is a side view schematically showing the positional relationship shown in Fig. 2A;
Fig. 3A is a conceptual diagram showing an example of a method of shading a light transmission section in a photo mask used for an optical alignment treatment;
Fig. 3B is a conceptual diagram showing another example of a method of shading a light transmission section in a photo mask used for an optical alignment treatment;
Fig. 4 is a cross-sectional view schematically showing a cell container constructed in a method of producing a light controlling device according to the embodiment;
Fig. 5 is a cross-sectional view schematically showing a light controlling device produced in a method of producing a light controlling device according to the embodiment;
Fig. 6 is a schematic diagram showing a state of alignment of liquid-crystal molecules in a plane at the surface of an optically treated section of a treated alignment film in a light controlling device according to a first embodiment;
Fig. 7 is a cross-sectional view schematically showing a light controlling device according to second embodiment;
Fig. 8 is a pattern diagram showing an alignment state of liquid-crystal molecules in a plane at the surface of a non-treated alignment film in the light controlling device according to the second embodiment;
Fig. 9A is a plan view schematically showing one of two transparent substrates included in a light controlling device according to a third embodiment;
Fig. 9B is a cross-sectional view schematically showing the light controlling device according to the third embodiment;
Fig. 10A is a plan view schematically showing one of two transparent substrates included in a light controlling device according to a fourth embodiment;
Fig. 10B is a cross-sectional view schematically showing the light controlling device according to the fourth embodiment;
Fig. 11A is a plan view schematically showing one of two transparent substrates included in a light controlling device according to a fifth embodiment;
Fig. 11B is a cross-sectional view schematically showing the light controlling device according to the fifth embodiment;
Fig. 12A is a front view schematically showing another positional relationship between a non-treated alignment film and a photo mask for the optical alignment process; and
Fig. 12B is a side view schematically showing the positional relationship shown in Fig. 12A.

### DETAILED DESCRIPTION OF THE EMBODIMENTS

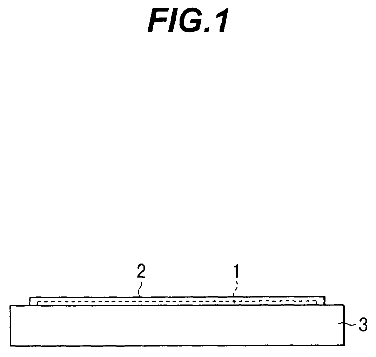

Figs. 1, 2A, 2B, 3, 4, and 5 are diagram for explaining a method of producing a light controlling device according to an embodiment.

First, as shown in Fig. 1, a transparent electrode pattern 1 and a non-treated alignment film 2 are formed on one surface of a transparent substrate 3.

The transparent electrode pattern 1 is formed in a desired contour according to, for example, a kind of a light controlling device to be produced.

To produce a liquid-crystal lens, the transparent electrode pattern 1 can be formed, for example, by one transparent electrode which covers a predetermined area of one surface of the transparent substrate 3 or by concentrically arranging many annular transparent electrodes having mutually different diameters.

To produce a liquid-crystal microlens, the transparent electrode pattern 1 can be formed, for example, by arranging many circular transparent electrodes in a matrix form.

To produce a liquid-crystal rotary wave plate, the transparent electrode pattern 1 can be formed, for example, by forming many transparent electrodes on one surface of the transparent substrate 3, leaving a central section of the surface of the transparent substrate 3 as an area to form a treated alignment film.

The transparent electrode pattern 1 is formed using transparent electrode materials such as indium tin oxide (ITO), zinc oxide, tin oxide, and indium oxide, and the like, or thin film of metal such as gold and the like.

The non-treated alignment film 2 is a film formed using an alignment material of which surface properties are changeable by radiation of light. The change of the surface properties is caused, when the film 2 is made of organic polymer, by phenomena such as (1) disconnection of a main chain or side chains of the polymer, (2) displacement of a direction of the side chain, and (3) cross-linking. The materials of the film 2 include, for example, polyvinyl cinnamate (PVC), polyimide (e.g., SE-610, SE-7792, or the like manufactured by Nissan Chemical Industries Ltd.), polysilane modified with cinnamoyl group, and organic material modified with chalcone group to enhance photodimerization by radiation of light having a long wavelength.

The non-treated alignment film 2 is formed in a desired shape such as a circular or rectangular shape by spin coating, offset printing, or the like. For the film 2, pre-baking and/or post-baking are/is carried out when necessary.

A location in which the non-treated alignment film 2 is formed is appropriately selected according to a kind or the like of the light controlling device to be produced.

When producing a light controlling device like that of a liquid-crystal lens, a liquid-crystal microlens, a liquid-crystal optical shutter or the like in which the optical characteristic is controlled by applying an electric field to the liquid crystal in a vertical longitudinal direction, the non-treated alignment film 2 is formed to cover the transparent electrode pattern 1 as shown in Fig. 1.

When producing a light controlling device like a liquid-crystal rotary wave plate in which the optical characteristic is controlled by applying an electric field to the liquid crystal in a horizontal direction, the non-treated alignment film 2 is directly formed in a predetermined location on one surface of the transparent substrate 3. In this configuration, the transparent electrode pattern 1 is not interposed between the film 2 and the transparent substrate 3.

Film thickness of the non-treated alignment film 2 can be appropriately selected in a range from about 0.001 micrometer (µm) to about 0.2 µm. The film thickness of the film 2 favorably ranges from about 0.01 µm to 0.1 µm.

The transparent substrate 3 itself, not including the transparent electrode pattern 1 and the non-treated alignment film 2, is formed using a plate or a film made of transparent glass, transparent resin, transparent ceramic, or the like, which have a desired light transmittance corresponding to use or the like of the light controlling device to be produced. It is favorable that the substrate 3 is thin, desirably one millimeter (mm) or less, and more desirably 0.3 mm or less.

Using the transparent substrate 3 with the transparent electrode pattern 1 and the non-treated alignment film 2, an optical alignment-treatment is conducted for the film 2.

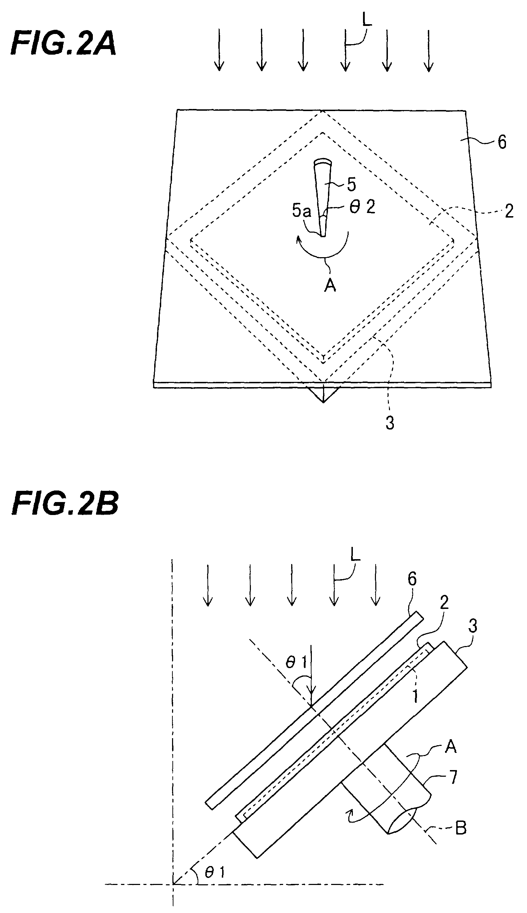

Figs. 2A and 2B show a method of executing the optical alignment-treatment. In the alignment-treatment as shown in these diagrams, a photo mask 6 with a slit-shaped light transmission section 5 formed therein and a light source, not shown, are placed outside of the non-treated alignment film 2. With a positional relationship between the photo mask 6 and the light source kept fixed, predetermined light L is radiated from the light source via the light transmission section 5 onto the non-treated alignment film 2 with a fixed, inclined angle of incidence while the non-treated alignment film 2 being rotated relative to the photo mask 6. By the radiation of light, the optical alignment-treatment is conducted for the non-treated alignment film 2. Resultantly, a treated alignment film is obtained.

In the method shown in these diagrams, the light L obliquely enters the film 2 with incidence angle θ1. The light L is substantially parallel to a central line of the light transmission section 5 in its longitudinal direction when viewed in a front view. The light L is a polarized light or non-polarized light with a predetermined wavelength depending on a material of the non-treated alignment film 2.

The transparent substrate 3 is attached onto a rotary shaft 7 such that the non-treated alignment film 2 faces upward in an inclined state and is inclined by an angle θ1 relative to a plane in which the incident angle of the light L is 0 degree (°), and the substrate 3 is rotated in a direction of an arrow mark A. The photo mask 6 is fixed to be substantially parallel to the transparent substrate 3. An end point 5a of the light transmission section 5 is placed in an extent of a central line B of the rotary shaft 7. Therefore, when the rotary shaft 7 rotates, the light transmission section 5 rotates relative to the non-treated alignment film 2. The section 5 rotates about the end point 5a.

The light transmission section 5 need has a line width equal to or larger than the wavelength of the light L used in the alignment-treatment. Length of the section 5 is appropriately selected according to a size and a shape of the region to be treated in the non-treated alignment film 2, a distance between the photo mask 6 and the non-treated alignment film 2, the incident angle θ1 of the light L, and the like.

The light transmission section 5 favorably has a contour of a sector, as view in plan, as shown in Fig. 2A to obtain a treated alignment film to radially align liquid-crystal molecules. However, the section 5 may be in a shape, as view in plan, of a slit, a rectangle, an ellipse, or shapeless. When the section 5 is in the sector shape, it is easy to uniformly impart energy to the non-treated alignment film 2. To impart energy non-uniformly to the film 2, the light transmission section 5 can be, for example, in the rectangular shape.

When the light transmission section 5 has the sector shape, it is desirable that the section has a line width equal to or larger than the wavelength of the light L also at the end point 5a as the center of the relative rotational movement. Therefore, the shape, as viewed in plan, of the section 5 cannot be exactly the shape of a sector depending on cases.

In this specification, the light transparent section 5 of following type is also called "a light transparent section 5 of a sector shape".

That is, the end point 5a of the section 5 has a line width equal to or larger than the wavelength of the light L and hence the shape, as viewed in plan, of the section 5 is not exactly a sector. However, if two sides each of which through, as viewed in plan, the end point 5a are extended to outside of the end point 5a, the light transmission section 5 can be in the shape, as viewed in plan, of an exact sector.

When the light transmission section 5 has the sector shape, the sector favorably has a central angle θ2 ranging from about 0.1° to about 45°, more favorably, from about 0.5° to about 5°.

By shading the light transmission section 5, it is possible to obtain a treated alignment film to successively change pre-tilt of molecules of the liquid crystal.

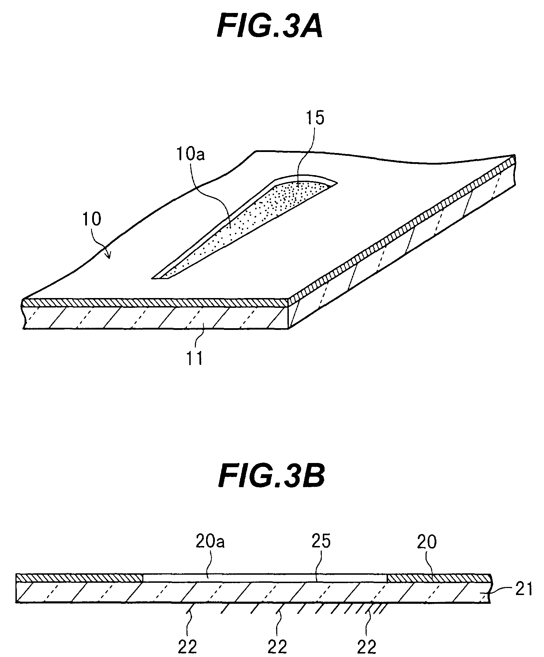

Figs. 3A and 3B are conceptual diagrams of a shaded light transmission section.

The light transmission section 15 of Fig. 3A is a light transmission section formed, when a light shielding film 10 having a sector-shaped slit 10a is formed on a transparent base material 11, by using the transparent base material 11 exposed in the slit 10a. The light transmission section 15 is colored such that the quantity of transmission light of the section 15 increases or decreases in a direction from a center of the sector-shaped slit 10a to an outer end thereof. In Fig. 3A, the colored area is smudged. Gradation of the smudging indicates that of the color.

A light transmission section 25 of Fig. 3B is also formed, when a light shielding film 20 having a sector-shaped slit 20a is formed on a transparent base material 21, by using the transparent base material 21 exposed in the slit 20a. The section 25 includes many shading plates 22 disposed on its rear surface (placed on the side of the non-treated alignment film 2 when used). For example, shading plates 22 are composed, as a whole, of masks of which the light transmission factor continuously ranging from several percent to 100 percent. In the light transmission section 25 shown in Fig. 3B, the quantity of transmission light decreases in a direction from the center of the sector-shaped slit 20a to an outer end thereof.

The wavelength and intensity of the light L used for the optical alignment-treatment are appropriately selected depending on various factors such as a material of the non-treated alignment film 2, the inclination angle of the transparent substrate 3, the rotary speed of the substrate 3, and materials of the liquid crystal used for the light controlling device to be produced.

When the optical alignment-treatment is conducted in the method described in conjunction with Figs. 2A and 2B, the incidence angle θ1 of the light L can be selected in a range from about 5° to about 85°. The angle θ1 favorably ranges from about 30° to about 80°, more favorably from about 30° to about 60°.

In the description below, an alignment film produced by conducting an optical alignment-treatment for a non-treated alignment film 2 is referred to as "a treated alignment film 2a" and an area of the alignment film 2a in which the alignment treatment has been actually conducted is referred to as "optically treated section".

A cell container is assembled using the transparent substrate 3 with the treated alignment film 2a obtained by conducting the optical alignment-treatment for the non-treated alignment film 2.

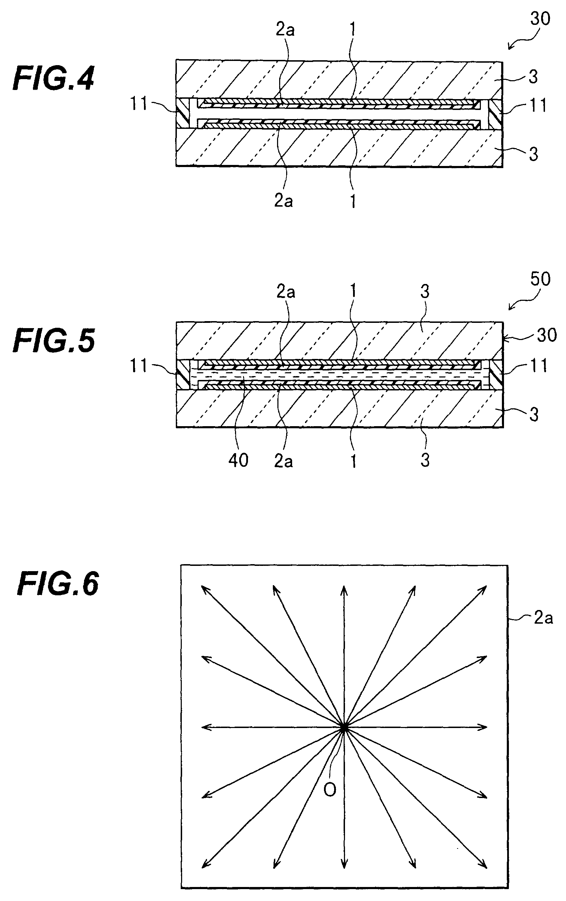

Fig. 4 schematically shows a cross section of the cell container assembled as above. As shown in Fig. 4, two transparent substrates 3, 3 each of which includes the treated alignment film 2a obtained by conducting the optical alignment-treatment for the non-treated alignment film 2 are attached to each other using seal members (e.g. adhesive) 11 disposed on edge sections of either one of the substrates 3, 3 with a predetermined cell thickness kept therebetween to resultantly assemble a cell container 30. Each treated alignment film 2a is placed inside the cell container 30. On two treated alignment films 2a, projections of the center of rotation of the slit-shaped light transmission section 5 used in the optical alignment-treatment overlap each other in a plan view.

In this connection, the cell container 30 may be assembled using one transparent substrate 3 having a treated alignment film 2a and the other transparent substrate 3 having a non-treated alignment film 2.

As shown in Fig. 5, by filling liquid crystal 40 in the cell container 30, a light controlling device 50 can be obtained. Various kinds of liquid crystal can be used.

By producing a light controlling device 50 with above-described manner, there can be obtained a light controlling device in which when each transparent electrode pattern 1 is not applied with a voltage, the liquid-crystal molecules at the surface of the optically treated section of the treated alignment film 2a are radially aligned in a plane.

In the light controlling device 50, the liquid-crystal molecules are uniformly aligned in any azimuth direction in the plane at the surface of the optically treated section. Resultantly, in the area of the treated alignment film 2a included in the optically treated section in a plan view, anisotropy of the apparent refractive index of the liquid-crystal layer is improved. Therefore, by using the area as an effective operation area of the light controlling device 50, the apparent refractive index of the device 50 is less influenced by the direction of light incident thereto. Therefore, light can be easily and desirably controlled.

The area of the treated alignment film 2a included in the optically treated section in a plan view will be referred to as "effective operation area" of the light controlling device herebelow.

Next, description will be given of a light controlling device according to a first embodiment. The light controlling device of a first embodiment can be produced using the method of producing a light controlling device in the embodiment described above. The description below will be given by referring to the reference numerals of Figs. 1, 2A, 2B, 4, and 5.

First, on one surface of a 0.3 mm thick glass substrate employed as the transparent substrate 3 of Fig. 1, a transparent electrode pattern 1 is formed using a transparent electrode material covering the surface of the glass substrate. On the pattern 1, a 0.05 µm thick polyimide film (SE-610 manufactured by Nissan Chemical Industries Ltd.) is formed by spin coating. The polyimide film is pre-baked for two minutes at 90°C and is then post-baked for 90 minutes at 220°C to resultantly obtain a non-treated alignment film 2.

For the non-treated alignment film 2, the optical alignment-treatment is conducted as shown in Figs. 2A and 2B to obtain a treated alignment film 2a. The light transmission section 5 used in the treatment has a sector in which the end point 5a is 0.5 µm wide, the string on the other end is 10 µm long, the radius of the section 5 is 200 µm long, and the center angle θ2 is about 2.7°.

The light L used in the optical alignment-treatment is an ultraviolet ray. The light L is radiated onto the non-treated alignment film 2 with the incident angle θ1 set to 45°. The quantity of radiate light is selected such that light having a 315 nm wavelength radiated via the slit-shaped light transmission section 5 onto the non-treated alignment film 2 has an intensity of 100 mJ/m². The glass substrate (transparent substrate 3) is rotated only once.

In the same manner as described above, another transparent substrate 3 on which a transparent electrode pattern 1 and a treated alignment film 2a are formed is produced.

The transparent substrates 3 are attached to each other using the seal members (e.g. adhesive) 11 as shown in Fig. 4 to assemble a cell container 30. In the cell container 30, projections onto the two treated alignment films 2a of the center of rotation of the slit-shaped light transmission section 5 used in the optical alignment-treatment overlap each other in a plan view.

The cell container 30 is then filled with liquid crystal 40 such as fluorine-containing nematic liquid crystal (e.g. ZLI-4792 manufactured by Merck Ltd.) or super-twisted nematic liquid crystal (e.g. ZLI-2293 manufactured by Merck Ltd.) as shown in Fig. 5 to obtain a light controlling device. The liquid crystal 40 does not contain the chiral agent.

In a state of the light controlling device 50 in which each transparent electrode pattern 1 is not applied with a voltage, a state of alignment of liquid-crystal molecules is investigated in a plane at the surface of the optically treated section of the treated alignment film 2a.

Fig. 6 schematically shows the state of alignment. In Fig. 6, each arrow mark indicates an alignment direction of liquid-crystal molecules.

As shown in Fig. 6, liquid-crystal molecules at the surface are radially aligned in a plane as a whole, centering on a position O. The position O is a projection, onto the treated alignment film 2a, of the center of rotation of the slit-shaped light transmission section 5 used in the optical alignment-treatment. Each liquid-crystal molecule at the surface is in a state slightly tilted with raising an outer side thereof. Using the surface of the treated alignment film 2a as a reference (0°), the liquid-crystal molecules have a pre-tilt angle of about 1°.

When a voltage is applied to each transparent electrode pattern 1 of the light controlling device 50, there does not occur any defect such as disclination line in the effective operation area. Therefore, it can be recognized that each liquid-crystal molecule rose in the direction of its pre-tilt angle in the effective operation area.

In effective operation area, anisotropy of the apparent refractive index of the liquid-crystal layer is improved.

Therefore, a desired control operation of light can be easily achieved by use of the light controlling device 50. The device 50 can be used, for example, as a liquid-crystal lens or a lens aberration compensator.

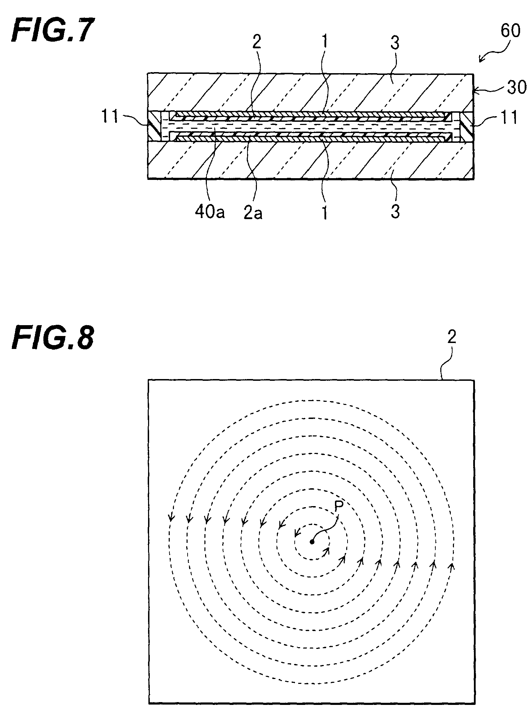

Referring next to Figs. 7 and 8, description will be given of a light controlling device according to a second embodiment.

Fig. 7 schematically shows a cross section of a light controlling device 60 of the embodiment. In Fig. 7, the same constituent components as those shown in Fig. 1 or 5 are assigned with the same reference numerals, and description thereof will be avoided.

As can be seen by comparing Fig. 7 with Fig. 5, the optical controlling device 60 differs in structure from the optical controlling device 50 of the first embodiment in that a non-treated alignment film 2 is formed on one of the transparent substrates 3 of the cell container 30 and the cell container 30 is filled with liquid crystal 40a containing a chiral agent (e.g., S-811 or ZLI-3786 manufactured by Merck Ltd.). Excepting these points, the optical controlling device 60 is the same in structure as the optical controlling device 50 of the first embodiment.

The chiral agent is added to the liquid crystal such that a ratio d/p between the cell thickness d of the light controlling device 60 and the chiral pitch p is 1/4. That is, the chiral agent is added so as to set the twist angle of the liquid crystal to 90°

The liquid crystal 40a containing the chiral agent is filled in the cell container 30 in an isotropic state or in a nematic state. In the nematic state, defect of flow orientation remains in the liquid crystal 40a. Therefore, in a relatively short period of time after the injection of the liquid crystal 40a, the liquid crystal 40a is heated for about one hour at 150C°. The liquid crystal 40a is then gradually cooled for re-alignment.

In the light controlling device 60 produced as above, the state of alignment of liquid-crystal molecules in a plane at a surface of the optically treated section of the treated alignment film 2a is substantially the same as that of liquid-crystal molecules in a plane at the surface of the optically treated section of the treated alignment film 2a in the light controlling device 50 of the first embodiment. On the other hand, the state of alignment of liquid-crystal molecules in a plane at a surface of the non-treated alignment film 2 is considerably different from that of the liquid-crystal molecules in a plane at the surface of the treated alignment film 2a.

Fig. 8 schematically shows the state of alignment of liquid-crystal molecules at the surface of the non-treated alignment film 2. Each arrow mark indicated by dotted lines indicates an alignment direction of the liquid-crystal molecules.

As shown in Fig. 8, liquid-crystal molecules at the surface are concentrically aligned about a point P of the non-treated alignment film 2 in a state in which each liquid-crystal molecule is relatively rotated 90° from an alignment direction of the liquid-crystal molecule at the surface of the treated alignment film 2a.

The point P of the non-treated alignment film 2 shown in Fig. 8 overlaps, in a plan view, the position of the projection, onto the treated alignment film 2a, of the center of rotation of the slit-shaped light transmission section 5 used in the optical alignment-treatment to form the treated alignment film 2a.

When a voltage is applied to each transparent electrode pattern 1 of the light controlling device 60, defects such as a disclination line does not appear in the effective operation area. This implies that the each molecule of liquid crystal rose respectively fixed direction in the effective operation area.

In this area, the anisotropy of the apparent refractive index of the liquid-crystal layer is improved.

Therefore, a desired control operation of light can be easily achieved by use of the light controlling device 60. The device 60 can be used for the purposes as the light controlling device 50.

To pre-tilt liquid-crystal molecules, there has been known a method in which surface energy of the non-treated alignment film is controlled (Mol. Cryst. Liq. Cryst., 1998, Vol. 316, pp. 227-230).

However, as can be seen from behavior of the liquid-crystal molecules of the light controlling device 60, when a treated alignment film for which a predetermined optical alignment-treatment is conducted is disposed one of two transparent substrate for the cell container and a non-treated alignment film is disposed on the other transparent substrate for the cell container, the rising direction of the liquid-crystal molecules can be controlled without controlling the surface energy of the non-treated alignment film.

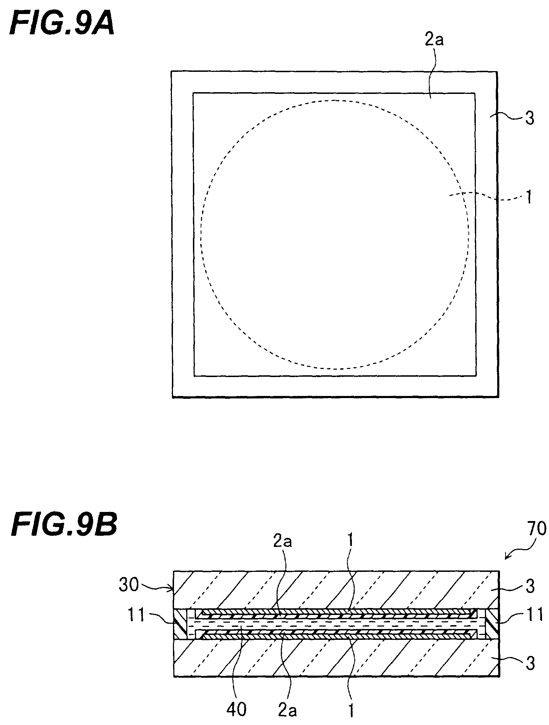

Next, referring to Figs. 9A and 9B, description will be given of a light controlling device according to a third embodiment.

Fig. 9A is a plan view schematically showing one of two transparent substrates 3 of the light controlling device 70 in the third embodiment.

Fig. 9B schematically shows a cross section of the light controlling device 70.

In Figs. 9A and 9B, the same constituent components as those shown in Fig. 5 are assigned with the same reference numerals, and description thereof will be avoided.

The light controlling device 70 of the third embodiment is a light controlling device which can be used as a liquid-crystal lens. In the device 70, each transparent electrode pattern 1 includes one circular transparent electrode. An overall upper surface of the treated alignment film 2a is an optically treated section.

Excepting these points, the light controlling device 70 is constituted in the same way as for the light controlling device 50 of the first embodiment. Like liquid-crystal molecules at the surface of the treated alignment film 2a of the light controlling device 50, liquid-crystal molecules at the surface of the optically treated section of the light controlling device 70 are radially aligned in a plane as a whole each of the liquid-crystal molecules is slightly tilted with raising an outer side thereof.

In the effective operation area of the light controlling device 70, anisotropy of the apparent refractive index of the liquid-crystal layer is improved.

Assume that when a voltage is applied to two circular transparent electrode patterns 1 opposing each other with the liquid crystal 40 therebetween, an electric filed generated between the patterns 1 is represented by lines of electric force. A line of electric force from a center of one electrode pattern 1 to the other electrode pattern 1 is linearly drawn. At a position nearer to the periphery of the electrode patterns 1, lines of electric force between the electrode patterns 1 draw curves toward the outside. The curvature of the lines of electric force is stronger as the lines are drawing between the more peripheral positions of the electrode patterns 1.

That is, the strength of the electric filed generated between the electrode patterns 1 become weaker as the distance the pertinent line of electric force and the center of the electrode patterns 1 increases in a plan view. A non-uniform electric filed is formed between the electrode patterns 1.

By using the non-uniform electric field, the tilt angle of liquid-crystal molecules in the effective operation area can be continuously changed in a direction from the center to the outside. Therefore, the light controlling device 70 can be used as a liquid-crystal lens having a variable focal distance.

In this connection, for example, by conducting an optical alignment-treatment for the non-treated alignment film 2 using a photo mask having shaded light transmission sections 15 or 25 described in conjunction with Fig. 3A or 3B, there can be obtained a treated alignment film 2a which can radially align the liquid-crystal molecules by continuously changing the pre-tilt thereof in a direction from the position O shown in Fig. 6 to the outside. The light controlling device in which the liquid-crystal molecules are thus aligned can be used as a liquid-crystal lens having a variable focal distance even when each transparent electrode pattern 1 is shaped into a rectangular.

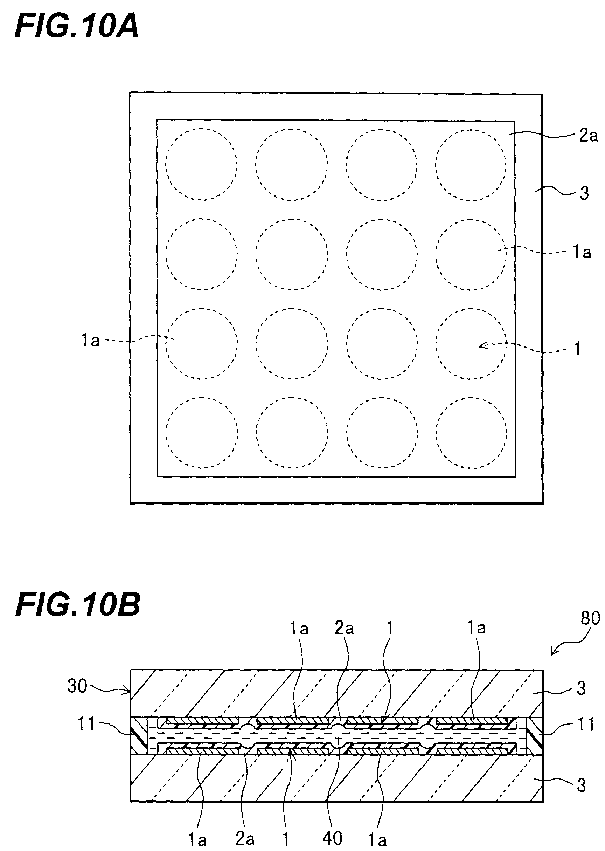

Referring next to Figs. 10A and 10B, description will be given of a light controlling device in a fourth embodiment.

Fig. 10A is a plan view schematically showing one of two transparent substrates 3 of the light controlling device 80 of the fourth embodiment.

Fig. 10B schematically shows a cross section of the light controlling device 80.

In Figs. 10A and 10B, the same constituent components as those shown in Fig. 5 are assigned with the same reference numerals, and description thereof will be avoided.

The light controlling device 80 of the fourth embodiment is a light controlling device which can be used as a liquid-crystal microlens. The device 80 differs in constitution from the light controlling device 50 of the first embodiment in points (1) and (2) as below.
(1) The transparent electrode pattern 1 formed on each of the transparent substrates 3 is composed of many circular transparent electrodes 1a disposed in a matrix form. Over each circular transparent electrode 1a formed on the lower transparent substrate 3, an associated circular transparent electrode 1a of the upper transparent substrate 3 is placed.
(2) One optically treated section of the treated alignment film 2a is formed over each circular transparent electrode 1a. A contour line in a plan view of one circular transparent electrode 1a substantially overlaps a contour line of the optically treated section thereover in a plan view.

Excepting these points, the light controlling device 80 is constituted in the same way as for the light controlling device 50 of the first embodiment. Like liquid-crystal molecules at the surface of the treated alignment film 2a of the light controlling device 50, liquid-crystal molecules at the surface of the optically treated section of the light controlling device 80 are radially aligned in a plane as a whole, each of the liquid-crystal molecules is slightly tilted with raising an outer side thereof.

In each effective operation area of the light controlling device 80, anisotropy of the apparent refractive index of the liquid-crystal layer is improved. By using a non-uniform electric field generated between each pair of the circular transparent electrodes 1a opposing each other with the liquid crystal 40 therebetween, the tilt angle of liquid-crystal molecules in the effective operation area can be continuously changed in a direction from the center to the outside. Each effective operation area can be therefore used as a liquid-crystal lens having a variable focal distance.

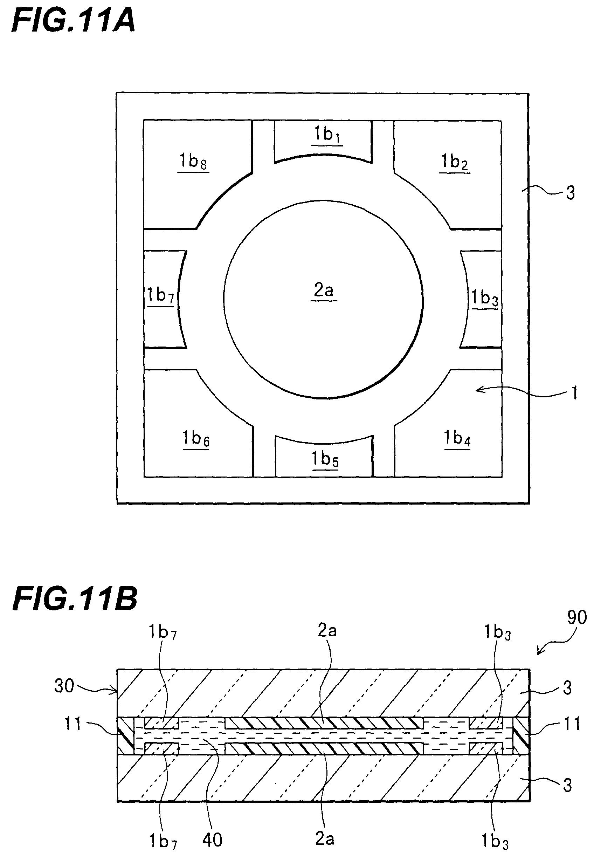

Next, referring to Figs. 11A and 11B, description will be given of a light controlling device according to a fifth embodiment.

Fig. 11A is a plan view schematically showing one of two transparent substrates 3 of the light controlling device 90 of the fifth embodiment.

Fig. 11B schematically shows a cross section of the light controlling device 90.

In Figs. 11A and 11B, the same constituent components as those shown in Fig. 5 are assigned with the same reference numerals, and description thereof will be avoided.

The light controlling device 90 of the fifth embodiment is a light controlling device which can be used as a liquid-crystal rotary wave plate. In the device 90, the optical characteristic is controlled by applying a horizontal electric field to the liquid crystal 40.

The device 90 differs in constitution from the light controlling device 50 of the first embodiment in points (1) and (2) as below.
(1) The circular-shaped treated alignment film 2a is directly disposed on each of two transparent substrates 3 without providing a transparent electrode pattern therebetween. The treated alignment film 2a formed on the lower transparent substrate 3 and that formed on the upper transparent substrate 3 overlap each other in a plan view. The overall upper surface of each treated alignment film 2a is the optically treated section.
(2) The transparent electrode pattern 1 on each transparent substrate 3 is composed of eight transparent electrodes 1b₁ to 1b₈ disposed to surround the treated alignment film 2a.

Excepting these points, the light controlling device 90 is constituted in the same way as for the light controlling device 50 of the first embodiment. Like liquid-crystal molecules at the surface of the treated alignment film 2a of the light controlling device 50, liquid-crystal molecules at the surface of the optically aligned section of the light controlling device 90 are radially aligned in a plane as a whole, each of the liquid-crystal molecules is slightly tilted with raising an outer side thereof.

In the effective operation area of the light controlling device 90, anisotropy of the apparent refractive index of the liquid-crystal layer is improved.

Of the transparent electrodes 1b₁ to 1b₈, a plurality of transparent electrodes respectively opposing each other via the treated alignment film 2a form respective sets of transparent electrodes. When voltages are applied to at least one set of transparent electrodes, an electric field (a horizontal electric field) is generated in a direction parallel to the surface of the transparent substrates 3, and the liquid-crystal molecules re-orient corresponding to the direction of the horizontal electric field. Resultantly, optical anisotropy takes place. The principle axis of the optical anisotropy extends in a direction of the horizontal electric field when viewed from the side of incidence of light. When the sets of transparent electrodes applied with voltages are sequentially and clockwise or counterclockwise selected, the axis of the optical anisotropy can be clockwise or counterclockwise rotated in a plane orthogonal to the direction of propagation of the light.

By appropriately selecting the sets of transparent electrodes applied with voltages and the strength of the horizontal electric field, the direction of polarization of the polarized light incident to the device 90 can be changed. An azimuth angle of an incident light to which the device function as a wave plate can be electrically controlled.

For a particular wavelength, retardation of the device 90 can be set to a value corresponding to a 1/4 wave plate, a 1/2 wave plate, or the like. The polarized state of light can be compensated for to obtain fixed linear polarization.

The light controlling device 90 which can serve as a liquid-crystal rotary wave plate can be used, for example, as a polarization stabilizer for optical communication.

Description has been given of a method of producing a light controlling device, the light controlling device, and a method of optical alignment-treatment. However, the present invention is not limited to the production method, the light controlling device, and the method of optical alignment-treatment. It is to be understood that various modifications, improvement, and combinations thereof are possible for those skilled in the art.

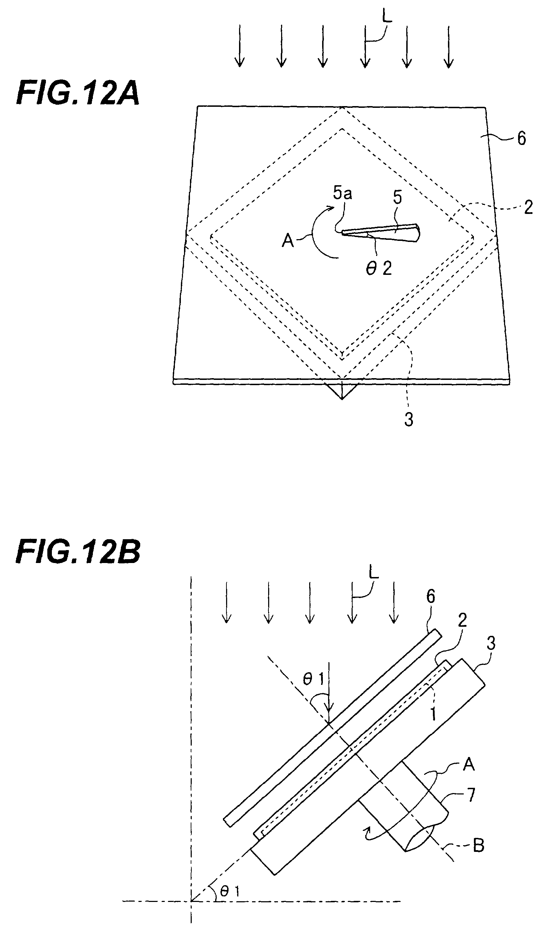

For example, the optical alignment-treatment can be conducted for a non-treated alignment film 2 using the method shown in Figs. 12A and 12B.

In the method of Figs. 12A and 12B, the photo mask 6 is disposed such that the central line in the longitudinal direction of the light transmission section 5 almost orthogonally intersects the light L in a front view. The light L obliquely enters the non-treated alignment film 2 with an incident angle θ1. The other arrangement is substantially the same as for Figs. 2A and 2B.

Therefore, the members shown in Figs. 12A and 12B are also included in Figs. 2A and 2B. In Figs. 12A and 12B, the same constituent components as those shown in Figs. 2A and 2B are assigned with the same reference numerals, and description thereof will be avoided.

By conducting the optical alignment-treatment for the non-treated alignment film 2 in this method, there can be obtained a treated alignment film which can concentrically align the liquid-crystal molecules in a plane at the surface of the alignment film. It is also possible to fabricate a light controlling device in which a cell container is assembled using one treated alignment film for which the optical alignment-treatment is conducted in the method shown in Figs. 12A and 12B and one non-treated alignment film. When the cell container is filled with liquid crystal to which a chiral agent is added, there can be obtained a light controlling device in which liquid-crystal molecules at the surface of the treated alignment film are concentrically aligned in a plane and liquid-crystal molecules at the surface of the non-treated alignment film are concentrically or radially aligned in a plane.

The angle between the central line in the longitudinal direction of the light transmission section 5 and the light L in a front view can be appropriately selected in a range from 0° to 180° according to a material of the non-treated alignment film 2, the wavelength of the light L, a kind (polarized or non-polarized) of the light L, intensity of the light L, and the like.

Specific examples of the light controlling device are a liquid-crystal lens, a liquid-crystal microlens, a liquid-crystal rotary wave plate, and liquid-crystal optical shutter. The light controlling device can be used as a single unit or in combination with various optical devices and/or various optical members, for example, with a linear polarizer, a circular polarizer, a cholesteric film, and the like. For example, an iris can be assembled by combining a liquid-crystal lens with a polarizer.

The above-described methods of optical alignment-treatment are also applicable to the production of optical devices, for example, a liquid-crystal prism in which discontinuity existing in an alignment direction of liquid-crystal molecules does not cause any serious problem in practices. Moreover, these methods can be used to produce a liquid-crystal display.

According to the present invention as described above, the liquid-crystal molecules can be uniformly aligned in any direction of azimuth in a plane at the surface of the liquid crystal and the alignment film. The light controlling device including liquid crystal facilitates a desired light control operation.

As described so far, according to the present invention, it is capable of aligning liquid-crystal molecules uniformly in any azimuth direction in a plane at a surface of an alignment film. This leads to a light controlling device to easily control light in a desired way.

While the present invention has been described with reference to the particular illustrative embodiments, it is not to be limited by those embodiments but only by the appended claims.

## Claims

1. A light controlling device, comprising:
a cell container, comprising; a first transparent substrate and a second transparent substrate, said first and second transparent substrates opposing each other with a gap therebetween; a transparent electrode pattern and an alignment film formed on an inside surface of each said substrate, at least one of said alignment films being a treated alignment film;
and liquid crystal filled in said cell container, said liquid crystal including liquid-crystal molecules uniformly aligned, when voltages are not applied to said transparent electrode patterns respectively formed on said first and second transparent substrates, in any direction of azimuth in a plane at the surface of said alignment film on said first transparent substrate and in a plane at the surface of said alignment film on said second transparent substrate.

2. A light controlling device according to claim 1, wherein said liquid crystal includes liquid-crystal molecules radially aligned, when voltages are not applied to said transparent electrode patterns respectively formed on said first and second transparent substrates, in the plane at the surface of said alignment film on said first transparent substrate or in the plane at the surface of said alignment film on said second transparent substrate.

3. A light controlling device according to claim 1, wherein said liquid crystal includes liquid-crystal molecules radially aligned, when voltages are not applied to said transparent electrode patterns respectively formed on said first and second transparent substrates, in the plane at the surface of said alignment film on said first transparent substrate and in the plane at the surface of said alignment film on said second transparent substrate.

4. A light controlling device according to claim 3, wherein each of said alignment films respectively formed on said first and second transparent substrates is a treated alignment film.

5. A light controlling device according to claim 1, wherein said liquid crystal includes,
liquid-crystal molecules radially aligned, when voltages are not applied to said transparent electrode patterns respectively formed on said first and second transparent substrates, in the plane at the surface of said alignment film on one of said first and second transparent substrates and
liquid-crystal molecules concentrically aligned, when voltages are not applied to said transparent electrode patterns respectively formed on said first and second transparent substrates, in the plane at the surface of said alignment film on other one of said first and second transparent substrates.

6. A light controlling device according to claim 5, wherein:
said alignment film formed on one of said first and second transparent substrates is a treated alignment film; and
said alignment film formed on other one of said first and second transparent substrates is a non-treated alignment film.

7. A light controlling device according to claim 6, wherein said liquid crystal includes a chiral agent.

8. A light controlling device according to claim 1, wherein each of said transparent electrode patterns respectively formed on said first and second transparent substrates is formed in a circular shape.

9. A light controlling device according to claim 1, wherein each of said transparent electrode patterns respectively formed on said first and second transparent substrates is composed of a lot of circular transparent electrodes disposed in a matrix form.

10. A light controlling device according to claim 1, wherein:
at least one of said alignment films is formed in a central section on an inside surface of associated first or second transparent substrate; and
said transparent electrode pattern formed on said associated transparent substrate is composed of a plurality of transparent electrodes arranged in a periphery of said alignment film formed on said associated transparent substrate.

11. A method of producing a light controlling device, comprising the steps of:
preparing a transparent substrate having one surface on which a transparent electrode pattern and a non-treated alignment film of which surface properties change by light radiated thereonto are formed;
arranging a photo mask including a slit-shaped light transmission section and a light source on an outside of said non-treated alignment film;
radiating light, with a relative positional relationship between said photo mask and said light source kept fixed, via said light transmission section onto said non-treated alignment film with a constant oblique angle of incidence of light while rotating said non-treated alignment film relative to said photo mask, conducting thereby an optical alignment-treatment for said non-treated alignment film, and resultantly obtaining a treated alignment film thus processed;
assembling a cell container using said transparent substrate having said treated alignment film; and
filling said cell container with liquid crystal.

12. A method of producing a light controlling device according to claim 11, wherein said optical alignment-treatment is conducted for said non-treated alignment film while fixing said photo mask and rotating said alignment film.

13. A method of producing a light controlling device according to claim 11, wherein said light transmission section has a form of a sector.

14. A method of producing a light controlling device according to claim 13, wherein said sector has a central angle ranging from 0.1° to 45°.

15. A method of producing a light controlling device according to claim 13, wherein said sector has a central angle ranging from 0.5° to 5°.

16. A method of producing a light controlling device according to claim 11, wherein two transparent substrates respectively having said treated alignment film are arranged to oppose each other with said alignment films facing inside to assemble said cell container.

17. A method of producing a light controlling device according to claim 11, wherein one transparent substrate having said treated alignment film and one transparent substrate having said non-treated alignment film are arranged to oppose each other with said alignment films facing inside to assemble said cell container.

18. A method of producing a light controlling device according to claim 17, wherein said cell container is filled with liquid crystal to which a chiral agent is added.

19. A method of optical alignment-treatment, comprising the steps of:
arranging a photo mask including a slit-shaped light transmission section and a light source on an outside of a non-treated alignment film of which surface properties change by light radiated thereonto; and
radiating light, with a relative positional relationship between said photo mask and said light source kept fixed, via said light transmission section onto said non-treated alignment film with a constant oblique angle of incidence of light while rotating said non-treated alignment film relative to said photo mask and conducting thereby an optical alignment-treatment for said non-treated alignment film.
